Europäisches Patentamt

European Patent Office

Office européen des brevets

(11) Publication number: **0 393 692**
**A2**

# EUROPEAN PATENT APPLICATION

(21) Application number: 90107510.1

(22) Date of filing: 20.04.90

(51) Int. Cl.⁵: **C10M 171/00, C08F 265/04,**
**//(C08F265/04,220:06),**
**C10N40:00,C10N70:00**

(30) Priority: 21.04.89 US 341450

(43) Date of publication of application:
**24.10.90 Bulletin 90/43**

(84) Designated Contracting States:
**DE FR GB SE**

(71) Applicant: **HERCULES INCORPORATED**
**Hercules Plaza**
**Wilmington Delaware 19894(US)**

(72) Inventor: **Ahmed, Syed M.**
**4912 S. Tupelo Turn**
**Wilmington, Delaware 19808(US)**

(74) Representative: **Lederer, Franz, Dr. et al**
**Lederer, Keller & Riederer, Patentanwälte,**
**Lucile-Grahn-Strasse 22**
**D-8000 München 80(DE)**

(54) **Electrorheological fluids.**

(57) Disclosed is a method for making electrorheological fluids in which substantially hydrophobic polymeric solid particles are dispersed in a vehicle consisting of an electrically non-conducting fluid, a surface modifying monomer is added to the vehicle, and the surface modifying monomer is polymerized in the vehicle on the surfaces of the dispersed solid polymer particles before the polar liquid is added, to form solid polymer particles that have substantially hydrophobic polymer cores and hydrophilic polymer shells around the cores, and a polar liquid is added to the vehicle and is adsorbed on the surfaces of the cores.

EP 0 393 692 A2

## ELECTRORHEOLOGICAL FLUIDS

This invention relates to a method for making electrorheological fluids in which polymeric solid particles with a a polar liquid absorbed in their surfaces are dispersed in an electrically non-conducting fluid.

Electrorheological (ER) fluids (also known as electroviscous fluids) are colloidal dispersions of polymeric particles in a low conductivity continuous medium that show a rapid increase in apparent viscosity of several or more orders of magnitude when exposed to an electric field, with typical response times being on the order of milliseconds. The increase is usually completely reversible, so that the compositions revert to their initial (zero-field) viscosity upon removal of the electric field.

These fluids respond to the influence of an electric potential by showing a very rapid and pronounced increase in bulk viscosity. This phenomenon can appear as an increase in apparent viscosity of several or more orders of magnitude. The phenomenon is generally completely reversible, with the compositions reverting to their initial (zero-field) viscosity upon removal of the electric field. ER fluids change their characteristics very rapidly when electric fields are applied or released with typical response times being on the order of milliseconds. The ability of ER fluids to respond rapidly to electrical signals allows devices using ER fluids to replace standard electromechanical elements. This greatly expands the number of repetitions a mechanical device can perform. Therefore, ER fluids offer important advantages in a variety of mechanical systems, particularly those that require a rapid response interface between electronic controls and mechanical devices.

One commercial application of such fluids is in electromechanical clutches in which the fluid is disposed between the surfaces of two electrically conductive members, across which an electric potential can be applied. The fluid responds to the application of the electric potential by instantaneously and reversibly changing its apparent bulk viscosity and yield stress and in sufficiently strong fields, the fluid thickens to a solid or semi-solid condition that transmits torque between the surfaces of the clutch members. Other applications in which ER fluids can be used include fluid filled engine mounts, high speed valves with no moving parts and the interface between electronic and mechanical parts of a machine.

Typically, an ER fluid consists of four components: continuous phase, a particulate material, a polar liquid that is normally adsorbed in the surface of the particulate material, and a stabilizer. The particulate material and polar liquid constitute a dispersed phase. Each of the four components can be one material or a mixture.

The continuous phase or vehicle is usually a non-polar liquid with a low dielectric constant and a high breakdown strength, such as a mineral oil, a silicone oil or an aliphatic hydrocarbon. Tne stability, zero-field viscosity, and density of the vehicle play an important role in the performance of ER fluids.

A variety of materials including starch, silica-gel, and hydrophilic synthetic polymers are conventionally used as the particulate material. The nonpolar dielectric fluid should have a permittivity less than that of the particles to facilitate the polarization of tne particles.

Conductivity, permittivity, particle size, and hydrophilicity of the particulate material are variables that may affect the performance of an ER fluid. The particle porosity and the characteristics of tne adsorbed polar liquid component (often referred to as a "dopant") are also important factors.

The polar liquid component in ER fluids is usually water for hydrophilic particles, but it may be an alcohol or other polar liquid. It may facilitate polarization of the particles, to create attractive forces between the particles, and additionally make the surface of the particles wet and sticky, thus facilitating the formation of chains of particles under the applied electric potential.

Suspension stabilizers such as surface active agents are often used to prevent the particles from coagulating and settling, or to increase the electrorheological response of the fluid, or both.

It is known, for instance from U.S. patents 4,033,892 and 4,129,513 and British patent 1,570,234, to make particulate material by first polymerizing a monomer to form a polymer (in these references, containing acid groups) recovering bulk polymer from the polymerization medium, grinding it to particles having the desired size and a density not greater than 1.8, adding the polar liquid, and finally dispersing the polymer particles in a continuous phase liquid that containe a stabilizer.

The density limitation reflects the problem of particle sedimentation encountered in known methods, which has been only partially resolved by matching the density of the particles with the density of the dispersion medium. However, the density of the medium is more sensitive to changes in temperature than is the density of the dispersed polymer, and consequently, phase separation may occur with a change in temperature.

There is also a problem in known methods in that the dispersion polymerization process, which results in a polymeric dispersion of finely divided spherical particles, has not been considered for making ER fluids mainly because monomers that produce somewhat hydrophilic polymers by in-situ polymerization are not usually soluble or dispersible in liquids with a low dielectric constant used as the vehicles for ER fluids, such as a mineral oil, and any polymers produced by such in-situ polymerization would not be sufficiently hydrophilic to be wetted by water as the polar liquid.

There is a need for a method for making rheological fluids that eliminates the grinding step, offers better control over polymer particle size and particle size distributions in a low conductivity vehicle, avoids the density-matching problem, and produces polymers that are sufficiently hydrophilic to be wetted by water. There is also a need for such a method that produces particles that require a lower amount of water than that required as a dopant for the conventional hydrophilic polymer particles of the prior art, to reduce the current densities required. (The higher the amount of water in an ER fluid, the higher the current density required).

According to the invention, a method for making electrorheological fluids in which polymeric solid particles are dispersed in a vehicle consisting of an electrically non- conducting fluid, and a polar liquid is added to the vehicle, characterized in that the polymeric solid particles are substantially hydrophobic, before the polar liquid is added, a surface modifying monomer that polymerizes to a polymer that has more hydrophilic reactive groups than the polymeric solid particles is added to the vehicle, and the surface modifying monomer is polymerized in the vehicle on the surfaces of the solid polymer particles before the polar liquid is added, whereby the solid polymer particles have substantially hydrophobic polymer cores and hydrophilic polymer shells around the cores on the surfaces of which the polar liquid is adsorbed. Preferably, the polar liquid is water.

The major part of the weight of the particles made according to the invention preferably consists of the substantially hydrophobic polymer, with a relatively minor amount of the hydrophilic surface-modifying polymer forming the shell that hydrophilically modifies the core at the particle-medium interface. More preferably, the hydrophilic shell constitutes about 15% of the particle by weight.

The electrorheological fluid prepared according to the invention produces polymers that are sufficiently hydrophilic to be wetted by water or another polar liquid independently of the degree of hydrophilicity of the polymer core, and since the water or other polar liquid dopant tends to be adsorbed only by the hydrophilic portion of the particle and not to enter into the core of the particle. The quantity of water required is thereby significantly reduced. It is to be noted that the higher the amount of water in an ER fluid, the higher are the current densities required to produce an ER response.

The monomer precursor for the substantially hydrophobic polymeric solid particles may first be dispersion polymerized to the desired particle size, recovered from the polymerization medium, and then dispersed in the dispersion medium. Preferably, however, to produce the polymeric solid particles a precursor monomer for the substantially hydrophobic polymeric particles is first dissolved in the vehicle and polymerized in the vehicle before the surface modifying monomer is added and polymerized in the presence of a steric stabilizer that has a strong affinity for the particle surface.

By preparing an electrorheological fluid according to this preferred modification of the invention the problems associated with the recovery, drying, and subsequent grinding of the polymer in known procedures are eliminated when producing the polymer core particles. The particle size obtained by the in-situ polymerization step of the method according to the invention can be accurately controlled, and adjustment of the level of the core polymer in the vehicle is facilitated.

Preferably, the diameter of the particles is 0.1 to not more than 25 microns, more preferably not more than 10 microns, and most preferably in the range of 0.5 to 0.8 micron including the shell, and in any case most preferably less than 1 micron. The smaller sizes provide more stable dispersions, since the rate of sedimentation of the dispersed phase particles follows Stokes' law, which shows that the stability against sedimentation is directly dependent upon the square of the particle diameter and the density difference between the particles and the medium and inversely dependent upon the viscosity of the medium. The organic medium used for polymerization is usually not as dense as the dispersed phase polymer, and may have a relatively low viscosity. Therefore, the particle size is an important factor in avoiding sedimentation during storage.

Since the polymerizations of both the monomers according to th invention are dispersion polymerizations, in which the monomeric starting material is soluble in the polymerization medium (although the resulting polymers are not), the initial mixture is homogeneous.

Among the monomers that may be polymerized to form the hydrophobic core particles dispersed in the medium are acrylates such as ethyl acrylate, propyl acrylate, isopropyl acrylate, butyl acrylate, isobutyl acrylate, 2-ethylhexyl acrylate, nonyl acrylate, and hexyl acrylate; and methacrylates such as methyl methacrylate, methyl ethacrylate, ethyl methacrylate, octyl acrylate, heptyl acrylate, octyl meth acrylate, isopropyl methacrylate and n-hexyl methacrylate. Higher alkyl acrylic esters that may be polymerized to

3

form the hydrophobic particles are decyl acrylate, isodecyl methacrylate, lauryl acrylate, stearyl acrylate, behenyl acrylate and myristyl acrylate and the corresponding methacrylates. Mixtures of two or three or more long chain acrylic esters may be copolymerized with one of the carboxylic monomers. One typical useful class of copolymers comprises the methacrylates in which the alkyl group contains 10 to 18 carbon atoms. Other monomers that can be used include styrenes (including alpha-methyl styrene), vinyl acetate, vinyl toluene, vinyl chloride, and acrylonitrile.

Preferably, a difunctional or trifunctional monomer is present during the polymerization of the precursor monomer, since a crosslinked core polymer particle requires less hydrophilic material to be added to the core. A cross-linking monomer, which may be the same or different, also preferably is present during the second polymerization, to form the hydrophilic shell polymer. The crosslinking agent is preferably a polyfunctional vinylidene monomer containing at least two terminal CH$_2$ groups, including for example, butadiene, isoprene, divinyl benzene, divinyl naphthalene, acrylates and the like. More preferred crosslinking monomers are triethylene glycol dimethacrylate (TEGDMA) or divinyl benzene (DVB). Preferably the polymerization mixtures contain up to about 5% by weight of the cross-linking monomer, based on the total monomer present, more preferably, about 0.1 to 2.0 weight percent.

Preferably, the surface-modifying monomer that is polymerized to form hydrophilic shells around the solid polymer particles is a monomer that contains a carboxyl, sulfate, sulfonate, hydroxy, amide, quaternary, amine, or polyoxyethylene group. Carboxyl-containing monomers include acrylic acid, methacrylic acid, itaconic acid, aconitic acid, fumaric acid, and maleic acid. Sulfonate-containing monomers include 2-sulfoethyl acrylate, 2-sulfoethyl methacrylate, p-vinylbenzene sulfonate, vinylbenzyl sulfonate, and vinyl sulfonate. Hydroxy-containing monomers include 2-hydroxyethyl acrylate and 2-hydroxyethyl methacrylate. Amide-containing monomers include acrylamide, methacrylamide and N-methylolacrylamide. Quaternary-containing monomer is vinylbenzyltrimethylammonium chloride. Amine-containing monomers include 2-aminoethyl methacrylate and 2-dimethyl-aminoethyl methacrylate. The polyoxyethylene-containing monomers are acrylate ester-polyoxyethylene adducts.

In the process of hydrophilic modification of the core polymer particles, consideration should be give as to whether the latter are crosslinked or non-crosslinked. In each case, the compatibility of the resulting hydrophilic polymer with the core polymer, the solubility of the hydrophilic polymer monomer in the continuous phase, as well as the ability of the monomer being added and polymerized to adhere to the surface of the hydrophobic polymer, without excessively solubilizing or diffusing into it, will determine the selection of such monomers.

It is usually desirable, when the hydrophobic particles are not cross-linked, to carry out the polymerization of the surface-modifying monomer under so-called "monomer-starved" conditions, for instance, by adding over a one hour period the amount of acrylic acid required for the desired shell weight to a PMMA dispersion maintained in an inert atmosphere at the polymerization temperature (80°C.); a conventional initiator (benzoyl peroxide) and triethylene glycol dimethacrylate (TEGDMA) as a crosslinking monomer are preferably used.

Particularly when the hydrophobic particles are cross-linked, all the acrylic acid, initiator and crosslinking agent may be added at once at the polymerization temperature, or they may be added to the PMMA dispersion at room temperature and polymerization begun only after the monomer has been allowed to reach an equilibrium between that adsorbed by the particles, that built up on the surfaces of the particles, and that still in the vehicle.

Those skilled in the art will be able to determine the appropriate hydrophylic monomer and and to choose the most desirable conditions to use on tne basis of known principles. It is known, for instance from U.S. Patent 4,710,525, to polymerize a hydrophilic acrylamide or methacrylamide monomer and a cross-linking monomer, for instance, onto acrylate or methacrylate polymer particles in water or a buffer solution; in that disclosure, the particles are dried and redistributed in water for reaction with biological active substances. It is also known, from U.S. Patent 4,873,166, that a monomer that is soluble in an insulating hydrocarbon medium can be polymerized in the presence of a polymer that is insoluble in the medium and has a polar group (carboxyl, hydroxyl, or amide) to produce shell-coated particles by successively solubilizing the polymer and depositing it on newly formed particles produced from the polymerized monomer.

The electrically non-conducting fluid vehicle may be selected from any one of a large number of well known electrically insulating hydrophobic liquids in which the monomer selected dissolves. These include transformer oils, transformer insulating fluids, silicone oils, mineral oil, aliphatic hydrocarbons such as paraffin oils, halogenated aromatic liquids and halogenated paraffins. Known transformer oils are liquids having characteristics properties of both electrical and thermal insulation. The preferred electrically non-conducting fluid vehicle is mineral oil, a colorless, petroleum liquid product normally containing a major

4

proportion of liquid aliphatic hydrocarbon materials, and known as a naturally occurring transformer oil include refined mineral oils that has a relatively low viscosity and high chemical stability. The specific gravity of mineral oil normally ranges from about 0.76 to about 0.79, with a boiling range from about 150°C. to about 200°C. While the flash point is normally above about 40°C., for safety reasons the flash point should preferably be above about 60°C. A mineral oil having a composition of 0 to less than 5 percent aromatics, about 40 to about 80 percent paraffins and about 15 to about 60 percent naphtha, having a flash point above 60°C. is a preferred vehicle.

While the proportion of mineral oil used may vary from 99 weight percent of mineral oil and 1 weight percent of monomer up to about 50 weight percent of mineral oil and 50 weight percent of monomer, the proportion of mineral oil preferably exceeds the amount of the monomers to be polymerized, and more preferably a concentration of about 15 to 40 weight percent of monomer is employed, most preferably, 15 to 25 weight percent of monomer.

Dispersions in organic media are inherently less stable than those in aqueous systems, and thus require a steric stabilizer to overcome the attractive interaction between these particles and prevent rapid coagulation. In preferred embodiments of the invention, a polymeric stabilizer is used for this to provide a repulsive steric barrier at the interface. Suitable polymeric stabilizers include homopolymers and copolymers that have a strong affinity for the particle surface, including random copolymers and block and graft copolymers having one segment that is soluble in the polymerization medium and the another that has an affinity towards the dispersed phase polymer. The comonomeric surfactants may be soluble in the continuous phase.

In the case of a block copolymer stabilizer, one block forms an anchor group that is nominally insoluble in the fluid media and attaches to the particle surface. The other block is soluble in the fluid, will generally be very long and provides the steric stabilization barrier. In the case of graft copolymers, a long polymeric backbone is formed by one of the copolymers and forms the anchor for attaching the molecule to the particle, while side chains of the other copolymer, attached at intervals along its length, are solvated by the fluid media.

A homopolymer can serve as a steric stabilizer if it is essentially soluble in the fluid but has some functionality with strong affinity for the particle surface. Similarly, a random copolymer can also be used as a steric stabilizer.

Typical polymers that can be used as preferred stabilizers include homopolymers such as poly(methyl methacrylate) (PMMA), poly(vinyl acetate) (PVA), poly(12 hydroxystearic acid) (PSA) or poly(lauryl methacrylate) (PLM). The following graft or block copolymers are preferably used when the dispersion polymer is poly(methyl methacrylate) or poly styrene: PMMA/PSA, PVA/PSA, PMMA/PLM or styrene-butadiene copolymer. When the dispersion polymer is poly(vinyl acetate), the stabilizing block or graft copolymer is preferably PVA/PSA or PMMA/PSA.

It is well known that the particle size and particle size distribution of the polymeric particles produced by dispersion polymerization can be controlled by varying the concentration of the monomer as well as the concentrations of the initiator and stabilizer. The degree of solvency of the polymerization medium and the polymerization temperature also have a strong effect on the particle size and the particle size distribution of the resulting polymeric dispersions. It is also known that, for the polymers that are soluble in their own monomers, the unreacted monomer keeps the growing radicals in the solution form for a much longer period compared to those monomers that do not act as a solvent for the resulting polymers. In such systems, the concentration of the monomer is very important, as a determinant not only of the particle size, but also of the stability of the dispersions.

The polar liquid may be any liquid that is capable of wetting the hydrophylic shell polymer. Water is of course the most economical, and since it also works well it is therefore the most desirable. The skilled man can easily determine, with a minimum of experimentation, what other polar liquids give a good ER response with the particular shell monomer that is used.

In the examples that follow, the following procedure was followed (except when otherwise indicated) in measuring the response of ER fluids produced according to this invention. A Rheometrics System 4 Rheometer (Rheometrics, Inc., Princeton, N.J.) was modified to facilitate the application of an applied electric field and was found to be a quick and reliable way of measuring the response of ER fluids.

Accordingly, the fluid option assembly (cup and bob) of the Rheometer was modified to facilitate the application of a DC potential across a 2 mm gap between the cup and bob. The test sample was held between two coaxial cylinders (the cup and bob) having a total surface area of 82.9 cm$^2$. The bob has a radius of 24 mm and is 55 mm in length and is attached to the sensitive transducer which can measure a maximum torque of 100 gm-cm. The cup has an inner radius of 26 mm allowing the 2 mm gap. It is held by a motor that can perform both rotational and oscillatory motions. The electric potential is introduced into the

5

bob by way of a brush device. The torque measurement is not attenuated by the incorporation of the voltage device. An insulator is placed between the transducer shaft and the electrified bob to shield the transducer electronics from the high voltage. The motor shaft and the cup are grounded. A Fluke voltage generator is used as the high voltage source capable of generating a voltage generator is used as the high voltage source capable of generating a maximum voltage of 10,000V, DC. Ampmeters are used to detect the current.

A shield is placed in front of the rheometer to screen high voltage from the operator during a normal run. A standard ER test is the voltage screen experiment. The ER fluid is subjected to oscillatory shear flow at 5 rad/sec and 15% strain initially for 5 minutes. Then a voltage is turned on while the fluid is being sheared. After 15 minutes (or a shorter time, e.g. 2-5 minutes), the voltage is turned off for a several minutes. This process is repeated up to a limit of 2000V with the voltage increased in each repetition. Also it is specified that experiments be discontinued if a maximum of 2500 micro Amps is drawn by the fluid. In the Tables, included herein, Electric Field is expressed in units of kilovolts per millimeter (KV/mm). The changes in the complex viscosity, storage modulus $G'$ and the loss modulus $G''$ were recorded for the electric fields of varying strength. In the tables, tne viscosity is expressed in units of poise.

The ER experiments can be done at different temperatures. Below room temperature, the temperature control .bath is used with the coolant being isopropyl alcohol, IPA. An external thermocouple probe immersed as close to the cup as possible is used to monitor the ER fluid temperature. For high temperatures, a Haake bath with silicone oil is used.

Changes in complex viscosity were studied as a function of applied field strength. As expected, the magnitude of the ER effect (change in the complex viscosity) increases with increasing field strength. The fluid behaves like a liquid in the unenergized state. With increased electric field strength the ER fluid goes through a viscoelastic to an elastic solid-like material. Upon termination of the applied potential, the fluid resumed its original liquid behavior.

The first step in preparing the ER fluid is to synthesize the hydrophobic polymer particles e.g. polymethylmethacrylate (PMMA), or polystyrene (PS) in mineral oil by the dispersion polymerization method according to the procedure in Example 1. The mineral oil had a room temperature viscosity of 90 cp, a density of 0.87 gm/cc and a dielectric constant at 1 kHz of 1.8.

## EXAMPLE 1

Dispersion polymerization of methylmethacrylate (MMA) in mineral oil was carried out using the ingredients shown in Table 1. This monomer is completely soluble in mineral oil and the resulting polymer is insoluble in this medium. In a typical experiment the stabilizer is first dissolved in mineral oil and charged to a jacketed glass reactor equipped with a stirrer, thermometer, condenser, and nitrogen sparging tube and heated to the polymerization temperature (80°C.) while sparging with nitrogen. In a separate beaker, a conventional initiator and triethylene glycol dimethacrylate (TEGDMA) as the crosslinking agent are added, dissolved in the monomer and then charged to the reactor held at the polymerization temperature. The monomer is then allowed to polymerize for about 16 hours. Addition of cold monomer to the mineral oil mixture brings the temperature down to about 65°C. Once the temperature of the reaction mixture returns to 80°C. in about 5 minutes after addition of monomer, a strong exotherm occurs and the monomer polymerizes adiabatically for a short time with temperatures reaching as high as 140°C. for several minutes. The polymerization reaction is then continued for several hours at 80°C. (The exothermic rise in temperature could have been controlled by a cooling liquid). The conversion to polymer at the end of the exotherm is more than 95% and at the end of the run is greater than 99.5%. The time for reaching the end product can be shortened by adding additional initiator at the end of the exotherm. The whole process can be completed within two hours.

The particle size of the dispersions prepared using the ingredients shown in Table 1 is in the range of about 0.5-0.8 micron, with a relatively narrow distribution of particle size.

TABLE 1

| Polymerization Recipe | | | |
|---|---|---|---|
| | | | Parts/100 |
| Mineral Oil | = 261 gms | (300 ml) | 55.3 |
| Stabilizer Acryloid 956 * | = 20 gms | | 4.3 |
| Monomer Methylmethacrylate | = 187 gms | (200 ml) | 39.7 |
| Benzoyl Peroxide | = 2.5 gms | | 0.5 |
| TEGDMA ** | = 1.1 gms | | 0.2 |
| Total | 471.6 | | 1.0 |
| | | | 00 |

*Produced by Rohm and Haas
**Triethylene glycol dimethacrylate (cross-linking agent)

## EXAMPLE 1A

The polymethyl methacrylate dispersions described in Example 1 were used as starting hydrophobic core particles. These polymers were crosslinked using triethylene glycol dimethacrylate (TEGDMA) crosslinking agent. Acrylic acid (AA) was polymerized onto the hydrophobic polymeric particles. The desired amount of acrylic acid containing dissolved benzoyl peroxide initiator and crosslinking agent (if desired) was fed to the PMMA dispersion maintained in an inert atmosphere at the polymerization temperature of 80° C., over a one hour period. This process produced polymer particles having a PMMA core that was hydrophobic and a polyacrylic acid (PAA) shell or globule that was hydrophilic. A typical recipe is given in Table 1A.

The PMMA-PAA fluids are improved by this invention by providing improved reversibility of the ER response. Some PMMA-PAA fluids that had been exposed to an applied field did not return to the same zero field viscosity on termination of the field. However, higher shear rates or longer waiting period did help in bringing the viscosities back to the Original zero field viscosity.

TABLE 1A

| PMMA dispersion of Example 1 | 250 grams | |
|---|---|---|
| Mineral oil | 250 grams | |
| Acrylic acid | 15.75 grams | (15 ml) |
| Benzoyl peroxide | 0.30 grams | |
| TEGDMA | 0.10 grams | |
| Total | 516.15 grams | |

## EXAMPLES 2-6

Tables 2 through 6 show the electrorheological performance of polymethyl methacrylate core/polyacrylic acid shell or globule electrorheological fluids. In Tables 2 and 3, the PMMA particles are made with triethylene glycol dimethacrylate (TEGDMA) as the crosslinking agent, while in Table 4 the PMMA had divinylbenzene (DVB) as the crosslinking agent. No crosslinking agent was used for making the PMMA particles for the ER fluids shown in Table 6.

7

TABLE 2

| Performance of PMMA-PAA Based ER Fluids | | | | | | | | | | |
| --- | --- | --- | --- | --- | --- | --- | --- | --- | --- |
| Effect of The Amount of PAA | | | | | | | | | | |
| Fluid Composition % | | | | | Viscosity (Poise) | | | | | |
| Example No. | PMMA | PAA | $H_2O$ | Rest | Field Strength KV/mm | 0 | 0.25 | 0.50 | 0.75 | 1.0 |
| 2A | 19.7 | 0.4[b] | 1.0 | 78.9 | | 1.8 | 1.8 | 1.8 | -- | -- |
| 2B | 19.4 | 2.1[b] | 1.0 | 77.5 | | 2 | 15 | 87 | -- | -- |
| 2C | 19.2 | 3.1[b] | 1.0 | 76.7 | | 2.9 | 83 | 234 | 328 | 345 |
| 2D | 19.7 | 0.4[c] | 1.0 | 78.9 | | 1.8 | 1.8 | 1.8 | -- | -- |
| 2E | 19.4 | 2.1[c] | 1.0 | 77.5 | | 2.3 | 19.3 | 122 | 197 | -- |
| 2F | 19.2 | 3.1[c] | 1.0 | 76.7 | | 2.8 | 81 | 234 | 252 | -- |

(a) PMMA crosslinked with TEGDMA.
(b) non-crosslinking PAA.
(c) PAA crosslinked with TEGDMA.

TABLE 3

| Performance of PMMA-PAA Based ER Fluids | | | | | | | | | | |
| --- | --- | --- | --- | --- | --- | --- | --- | --- | --- |
| Effect of Dopant ($H_2O$) | | | | | | | | | | |
| Fluid Composition % | | | | | Viscosity (Poise) | | | | | |
| Example No. | PMMA | PAA | $H_2O$ | Rest | Field Strength KV/mm | 0 | 0.25 | 0.50 | 0.75 | 1.0 |
| 3A | 19.9 | 0.4[b] | 0.25 | 79.45 | | 1.8 | 1.8 | 1.8 | -- | -- |
| 3B | 19.7 | 0.4[b] | 1.00 | 78.9 | | 1.9 | 1.8 | 1.8 | -- | -- |
| 3C | 19.9 | 0.4[c] | 0.25 | 79.45 | | 1.8 | 1.8 | 1.8 | -- | -- |
| 3D | 19.7 | 0.4[c] | 1.00 | 78.9 | | 1.8 | 1.8 | 1.8 | -- | -- |
| 3E | 19.5 | 2.1[b] | 0.7 | 77.7 | | 2.2 | 41 | 162 | -- | -- |
| 3F | 19.4 | 2.1[b] | 1.0 | 77.5 | | 2.0 | 15 | 87 | -- | -- |
| 3G | 19.5 | 2.1[c] | 0.7 | 76.9 | | 2.6 | 23 | 44 | 325 | 463 |
| 3H | 19.4 | 2.1[c] | 1.0 | 77.5 | | 2.3 | 19 | 122 | 197 | -- |
| 3I | 19.3 | 3.1[b] | 0.7 | 76.9 | | 2.9 | 78 | 244 | 415 | 523 |
| 3J | 19.2 | 3.1[b] | 1.0 | 76.7 | | 2.9 | 82 | 234 | 326 | 345 |
| 3K | 19.3 | 3.1[c] | 0.7 | 76.9 | | 2.8 | 83 | 247 | 417 | 510 |
| 3L | 19.2 | 3.1[c] | 1.0 | 76.7 | | 2.8 | 81 | 234 | 256 | -- |

(a) PMMA crosslinked with TEGDMA.
(b) non-crosslinked.
(c) PAA crosslinked with TEGDMA.

TABLE 4

| Performance of PMMA-PAA Based ER Fluids | | | | | | | | | | |
|---|---|---|---|---|---|---|---|---|---|---|
| Effect of Dopant (H$_2$O) | | | | | | | | | | |
| Fluid Composition % | | | | | | Viscosity (Poise) | | | | |
| Example No. | PMMA | PAA | H$_2$O | Rest | Field Strength KV/mm | 0 | 0.25 | 0.50 | 0.75 | 1.0 |
| 4A | 18.8 | 5.0[b] | 0.25 | 75.95 | | 4.0 | 8.9 | 8.8 | 85 | 7.3 |
| 4B | 18.7 | 5.0[b] | 0.50 | 75.8 | | 2.9 | 31 | 90 | 141 | 190 |
| 4C | 18.7 | 4.9[b] | 0.75 | 75.65 | | 2.9 | 30 | 188 | 430 | 580 |
| 4D | 18.6 | 4.9[b] | 1.0 | 75.5 | | 2.5 | 34 | 190 | (312-190) | |
| | | | | | Field Strength KV/mm | 0.0 | 0.05 | 0.1 | 0.25 | 0.3 |
| 4E | 18.6 | 4.9[b] | 1.1 | 75.4 | | 3.3 | 6.8 | 8.3 | -- | -- |
| 4F | 18.5 | 4.9[b] | 1.8 | 74.8 | | 2.5 | -- | -- | 21 | 21 |
| 4G | 18.2 | 4.8[b] | 3.3 | 73.7 | | 3.1 | 5.1 | 6.5 | -- | -- |

(a) PMMA crosslinked with DVB.
(b) non-crosslinking PAA.

TABLE 5

| Performance of PMMA-PAA Fluids | | | | | | | | | | |
|---|---|---|---|---|---|---|---|---|---|---|
| Fluid Composition % | | | | | | Viscosity (Poise) | | | | |
| Example No. | PMMA | PAA | H$_2$O | Rest | Field Strength KV/mm | 0 | 0.25 | 0.50 | 0.75 | 1.0 |
| 5A | 19.4 | 2.1[b] | 0.25 | 78.25 | | 1.7 | 1.8 | 1.8 | -- | -- |
| 5B | 19.3 | 2.1[b] | 0.50 | 78.10 | | 1.8 | 1.9 | 1.9 | -- | -- |
| 5C | 19.3 | 2.1[b] | 0.75 | 77.85 | | 1.9 | 2.0 | 2.0 | -- | -- |
| 5D | 19.2 | 2.1[b] | 1.0 | 77.70 | | 1.8 | 1.9 | 1.9 | -- | -- |

(a) non crosslinked PMMA.
(b) non crosslinked PAA.

Table 2 shows that an increased amount of polyacrylic acid, to form the hydrophilic shell, increases the ER performance. It can also be seen in Table 2 that both crosslinked and uncrosslinked poly(acrylic acid) give good electrorheological performance. As expected, the ER response as measured by viscosity shows a steady increase as the field strength is increased.

The data shown in tables 3 and 4 demonstrate that there is an optimum dopant level for ER performance. Table 4 also shows that when DVB is used as the crosslinking monomer with PMMA, the results are similar to those when TEGDMA is the crosslinking agent. However, as seen in Table 5, field strengths that produce pronounced ER performance in the crosslinked PMMA, show no significant ER response at low PAA levels. This indicates that the surface hydrophilicity was not sufficient for these particles to be electrically active.

**Claims**

1. A method for making electro-rheological fluids in which polymeric solid particles are dispersed in a vehicle consisting of an electrically non-conducting fluid, and a polar liquid is added to the vehicle, is characterized in that the polymeric solid particles are substantially hydrophobic, before the polar liquid is added, a surface modifying monomer that polymerizes to a polymer that has more hydrophilic reactive groups than the polymeric solid particles is added to the vehicle, and the surface modifying monomer is polymerized in the vehicle on the surfaces of the solid polymer particles before the polar liquid is added, whereby the solid polymer particles have substantially hydrophobic polymer cores and hydrophilic polymer shells around the cores on the surfaces of which the polar liquid is adsorbed.

2. A method for making electrorheological fluids as claimed in claim 1, characterized in that the precursor monomer is dissolved in the vehicle and polymerized in the vehicle in the presence of a steric stabilizer that has a strong affinity for the particle surface, to form a dispersion of the polymeric solid particles, before the surface modifying monomer is added and polymerized in the dispersion.

3. A method for making electrorheological fluids as claimed in claim 1 or 2, further characterized in that the polar liquid is water.

4. A method for making electrorheological fluids as claimed in claim 1, 2, or 3, further characterized in that the hydrophilic shells constitute about 15% of the particles by weight.

5. A method for making electrorheological fluids as claimed in claim 1, 2, or 3, further characterized in that the diameter of the particles is 0.1 to not more than 25 microns.

6. A method for making electrorheological fluids as claimed in claim 5, further characterized in that the diameter of the particles is less than 1 micron.

7. A method for making electrorheological fluids as claimed in claim 6, further characterized in that the diameter of the particles including the shell is in the range of 0.5 to 0.8 micron.

8. A method for making electrorheological fluids as claimed in any of the preceding claims, further characterized in that a crosslinking monomer is present during the polymerization of the surface modifying monomer to form the hydrophilic shell polymer.

9. A method for making electrorheological fluids as claimed in claim 8, further characterized in that a crosslinking monomer is triethylene glycol dimethacrylate (TEGDMA) or divinyl benzene (DVB).

10. A method for making electrorheological fluids as claimed in any of claims 2 to 8, further characterized in that a crosslinking monomer is present during the polymerization of the precursor monomer.

11. A method for making electrorheological fluids as claimed in any of claims 8 to 10, further characterized in that the crosslinking monomer is present in an amount of up to about 5% by weight of the cross-linking monomer, based on the total monomer present.

12. A method for making electrorheological fluids as claimed in any of claims 2 to 8, further characterized in that the precursor monomer is an acrylate, a methacrylate, vinyl acetate, vinyl chloride or acrylonitrile.

13. A method for making electrorheological fluids as claimed in claim 12, further characterized in that the precursor monomer is methyl methacrylate.

14. A method for making electrorheological fluids as claimed in claim 13, further characterized in that the steric stabilizer is a copolymer of poly(methyl methacrylate) and poly(12 hydroxystearic acid (PMMA/PSA), a copolymer of poly(methyl methacrylate) and poly(lauryl methacrylate) (PMMA/PLM), or a copolymer of poly(vinyl acetate) and poly(12 hydroxystearic acid (PVA/PSA).

15. A method for making electrorheological fluids as claimed in any of the preceding claims, further characterized in that the electrically non-conducting fluid is a mineral oil.

16. A method for making electrorheological fluids as claimed in claim 15, further characterized in that the mineral oil has a room temperature viscosity of about 90 cp, a density of about 0.87 gm/cc and a dielectric constant at 1 kHz of about 1.8.

17. A method for making electrorheological fluids as claimed in claim 15 or 16, further characterized in that the concentration of the precursor monomer in the mineral oil is about 15 to 40 weight percent.